# EUROPEAN PATENT APPLICATION

(11) **EP 3 974 482 A1**
(43) Date of publication of application: **30.03.2022**
(21) Application number: 20199105.6
(22) Date of filing: 29.09.2020
(51) Int. Cl.: C09D 5/16, C09D 7/63

(54) **FOULING RELEASE COATING COMPOSITION**

(71) Applicant: Jotun A/S, 3202 Sandefjord (NO)
(72) Inventor: KRINGHAUG, Henrik H, 3115 Tønsberg (NO); READ, Marianne, 3942 Porsgrunn (NO); SEIM, Marit, 3970 Langesund (NO)
(74) Representative: Dehns

(57) **Abstract**

A fouling release coating composition comprising:
i) a polysiloxane-based binder system comprising at least two different curable polysiloxane-based binders A and B wherein binder A is present in 15 wt.% or more of the total weight of the binder system and has a weight average molecular weight of 35,000 or less and binder B is present in 15 wt.% or more of the total weight of binder system and has a weight average molecular weight of 70,000 or more;
ii) a biocide, preferably a pyrithione salt; and
iii) a catalyst.

## Description

This invention relates to fouling release coating compositions. In particular, the invention provides a fouling release composition comprising a combination of polysiloxanes with improved fouling performance.

### Background

Fouling release coatings are used on marine vessels to prevent fouling by marine organisms. These work on the principle that the fouling release surface has a very low coefficient of friction and hence it is challenging for marine organisms to cling to the surface, especially when a vessel is underway and hence the action of the sea can wash marine organisms from the hull.

Fouling release coatings are therefore characterized by low surface tension and low modulus of elasticity so that biofouling does not stick to the surface or the biofouling is easily washed off by the friction of the water against the surface.

Such coatings often comprise of polysiloxane-based binders having reactive (curable) groups such as hydroxyl or silyl units. A polysiloxane-based binder can be hydrolyzed and condensed in the presence of moisture and catalysts.

The addition of biocides to fouling release coatings has become increasingly popular in the last decade. It has been proven to enhance a number of technical effects including reducing spray dust, and improving storage stability and reinforcing fouling prevention coatings. However, the main benefit of a biocidal fouling release coating is the improved fouling prevention.

This invention concerns improving the fouling prevention of a biocidal fouling release coating without having a detrimental effect on other properties of the paint.

Fouling release coatings comprising a single polysiloxane-based binder, pigments, extenders and biocides are known and exemplified in the prior art.

WO2011076856 describes a fouling release composition comprising polysiloxane binder matrix, biocide and hydrophilic modified silicone oils. It is generically mentioned that binders may be used alone or in combination but only one type of polysiloxane based binder is used in the examples.

WO2014077205 describes a fouling release composition comprising a silanol terminated polysiloxane binder, copper pyrithione and polyether modified silicone oil. Only a single polysiloxane is used.

There are also some disclosures of biocide free bi- or trimodal polydimethylsiloxane binder mixtures.

WO2008074102 describes a biocide free fouling release coating composition comprising a combination of at least two room temperature vulcanizing α, ω-hydroxy polydimethylsiloxanes with different (undefined) molecular weights, the first one having molecular weight of 20 000 - 40 000, the second one having molecular weight of 60 000 - 100 000. In example 1, a combination of two different polysiloxanes are used having molecular weights of 50 000 and 90 000 respectively in a ratio of 22:1.

WO92/00357 describes a way of improving fouling performance in a biocide free coating by reducing the amount of crosslinker. In the examples 3 different α, ω-hydroxy polydimethylsiloxanes are used. The molecular weights for the siloxanes are different from the present invention.

The present inventors have now found that the use of a combination of two or more siloxane binders in combination with one or more biocides in a fouling release coating offers advantageous properties. We show that using a combination of at least two different polysiloxane binders with different molecular weights give better antifouling properties than using a single polysiloxane binder.

In the present invention it has been found that a polysiloxane-based binder system comprising at least two different organopolysiloxane binders improves the antifouling performance of biocide containing fouling release coatings. The polysiloxane-based binder system should comprise at least 15 wt.% of a polymer A having a Mw of 35 000 or less and at least 15 wt.% of a polymer B having a Mw of more than 70 000.

The combination of certain binders with different viscosities not only improve the mechanical properties of the coating but, surprisingly, fouling performance was improved. Without wishing to be limited by theory, the mechanical properties may be improved by having short polymer chains that resist high stress and long chains that impart ductility to the system. The paint containing a multimodal polysiloxane matrix may have improved fouling performance due to increased mobility of biocide due to domains of short and long chains throughout the matrix.

### Summary of Invention

Viewed from one aspect the invention provides a fouling release coating composition comprising:
i) a polysiloxane-based binder system comprising at least two different curable polysiloxane-based binders A and B wherein binder A is present in 15 wt.% or more of the total weight of the binder system and has a weight average molecular weight of 35,000 or less and binder B is present in 15 wt.% or more of the total weight of binder system and has a weight average molecular weight of 70,000 or more;
ii) a biocide, preferably a pyrithione salt; and
iii) a catalyst.

Viewed from another aspect the invention provides a fouling release coating composition comprising:
i) a polysiloxane-based binder system comprising at least three different curable polysiloxane-based binders A, B and C wherein binder A is present in 15 wt.% or more of the total weight of the binder system and has a weight average molecular weight of 35,000 or less, binder B is present in 15 wt.% or more of the total weight of binder system and has a weight average molecular weight of 70,000 or more, and binder C is present in 15 wt% or more of the total weight of the binder system and has a weight average molecular weight of 40,000 to 70,000;
ii) a biocide; and
iii) a catalyst.

Viewed from another aspect the invention provides a fouling release coating composition comprising;
i) a polysiloxane-based binder system comprising at least two different curable polysiloxane-based binders A and B wherein binder A is present in 15 wt.% or more of the total weight of the binder system and has a viscosity of 1500 mPas or less, and binder B is present in 15 wt.% or more of the total weight of binder system and has a viscosity of 10,000 mPas or more;
ii) a biocide; and
iii) a catalyst.

Viewed from another aspect the invention provides a fouling release coating composition comprising;
i) a polysiloxane-based binder system comprising at least three different curable polysiloxane-based binders A, B and C wherein binder A is present in 15 wt.% or more of the total weight of the binder system and has a viscosity of 1500 mPas or less, binder B is present in 15 wt.% or more of the total weight of binder system and has a viscosity of 10,000 mPas or more, and binder C is present in 15 wt% or more of the total weight of the binder system and has a viscosity of 2,000 to 9,500 mPas;
ii) a biocide; and
iii) a catalyst.

It is preferred if the fouling release coating composition of the invention further comprises a crosslinking agent.

Viewed from another aspect the invention provides a process for applying a fouling release coating composition to a substrate comprising applying, e.g. by spraying, a fouling release coating composition as herein defined to a substrate and allowing the coating composition to cure.

Viewed from another aspect the invention provides a substrate comprising a cured fouling release coating composition as hereinbefore defined.

### DEFINITIONS

As used herein the term "fouling release composition" or "fouling release coating composition" refers to a composition which, when applied to a surface, provides a fouling release surface to which it is difficult for sea organisms to permanently stick.

As used herein the term "binder system" refers to the film forming components of the composition. The polysiloxane-based binders of the fouling release composition are the main binders in the composition, i.e. they form at least 50 wt% of the binder present, such as at least 75 wt%. As used herein, the term "binder system" does not encompass additive oils. Additive oils are not considered herein to be film-forming components.

As used herein the term "paint" refers to a composition comprising the fouling release coating composition as herein described and optionally solvent which is ready for use, e.g. for spraying. Thus, the fouling release coating composition may itself be a paint or the fouling release coating composition may be a concentrate to which solvent is added to produce a paint.

As used herein the term "polysiloxane" refers to a polymer comprising siloxane, i.e. -Si-O- repeat units.

As used herein the term "polysiloxane-based binder" refers to a binder that comprises at least 50 wt%, preferably at least 60 wt% and more preferably at least 70 wt% repeat units comprising the motif -Si-O-, based on the total weight of the polymer. Polysiloxane-based binders may comprise up to 99.99 wt% repeat units comprising the motif -Si-O-, based on the total weight of the polymer. The repeat units, -Si-O- may be connected in a single sequence or alternatively may be interrupted by non-siloxane parts, e.g. organic-based parts.

As used herein the term "non-degradable polysiloxane-based binder" refers to a polysiloxane-based binder which does not undergo hydrolytic degradation or erosion in sea water.

The term free of tin compounds means that the fouling release composition of the invention contains less than 0.1 wt% of compounds comprising tin, ideally no compounds comprising tin.

As used herein the term "alkyl" refers to saturated, straight chained, branched or cyclic groups.

As used herein the term "cycloalkyl" refers to a cyclic alkyl group.

As used herein the term "alkylene" refers to a bivalent alkyl group.

As used herein the term "alkenyl" refers to unsaturated, straight chained, branched or cyclic groups.

As used herein the term "aryl" refers to a group comprising at least one aromatic ring. The term aryl encompasses fused ring systems wherein one or more aromatic ring is fused to a cycloalkyl ring. An example of an aryl group is phenyl, i.e. C₆H₅.

As used herein the term "substituted" refers to a group wherein one or more, for example up to 6, more particularly 1, 2, 3, 4, 5 or 6, of the hydrogen atoms in the group are replaced independently of each other by the corresponding number of the described substituents.

As used herein the term "arylalkyl" group refers to groups wherein the bond to the Si is via the alkyl portion.

As used herein the term "polyether" refers to a compound comprising two or more -O- linkages interrupted by alkylene units.

As used herein the terms "poly(alkylene oxide)", "poly(oxyalkylene) and "poly(alkylene glycol)" refer to a compound comprising -alkylene-O- repeat units. Typically the alkylene is ethylene or propylene.

As used herein the term wt.% is based on the dry weight of the coating composition, unless otherwise specified

As used herein the term "PDI" or polydispersity index refers to the ratio Mw/Mn, wherein Mw refers to weight average molecular weight and Mn refers to number average molecular weight. PDI is sometimes alternatively referred to as D (dispersity).

As used herein the term "volatile organic compound (VOC)" refers to a compound having a boiling point of 250 °C or less.

As used herein "antifouling agent" or "biocide" refers to a biologically active compound or mixture of biologically active compounds that prevents the settlement of marine organisms on a surface, and/or prevents the growth of marine organisms on a surface and/or encourages the dislodgement of marine organisms from a surface. These terms are used interchangeably.

### Detailed description of Invention

This invention relates to a fouling release coating composition comprising at least two different curable polysiloxane-based binders of differing molecular weights. Through the use of the binder system of the invention, fouling release coatings can be prepared with improved fouling protection, improved mechanical properties, reduced environmental impact (emission from fouling induced hull roughness), maintained application properties and maintained adhesion.

### Polysiloxane-based binder system (i)

The binder system in the fouling release coating composition comprises at least two curable polysiloxane-based binder components. These components have differing molecular weights and hence differing viscosities. The binder system of the invention can therefore be seem as a multimodal polysiloxane based binder mixture comprising at least two different organopolysiloxane polymers A and B.

In one embodiment, the binder system of the invention can be seen as a multimodal polysiloxane based binder mixture comprising at least three different organopolysiloxane polymers A, B and C.

Any polysiloxane-based binder is preferably a non-degradable curable polysiloxane-based binder.

The general description which follows applies to all of binders A to C. Thus, any of binders A to C may have a structure D1-D3 as described below.

Any polysiloxane-based binder present in the coating compositions of the present invention comprises at least 50 wt% polysiloxane parts, preferably more than 60 wt% polysiloxane parts and still more preferably more than 70 wt% polysiloxane parts such as 99.99 wt% polysiloxane parts or more. Typical ranges include 50-100 wt% polysiloxane parts, 60-99.999 wt% polysiloxane parts, or 70-99.99 wt% polysiloxane parts in the polysiloxane-based binder.

The polysiloxane parts are defined as repeat units comprising the motif -Si-O- based on the total weight of the polysiloxane-based binder. The wt% of polysiloxane parts can be determined based on the stoichiometric wt ratio of starting materials in the polysiloxane synthesis. Alternatively, the polysiloxane content can be determined using analytical techniques such as IR or NMR

Typically, the wt.% of polysiloxane parts is calculated based on the molar ratio of reactive starting materials in the polysiloxane synthesis. If a molar excess of a monomer is present in the reaction mixture then such a molar excess is not counted. Only those monomers that can react based on the stoichiometry of the reaction are counted.

Information about the wt.% polysiloxane parts in a commercially available polysiloxane-based binder is easily obtainable from the supplier.

It is to be understood that the polysiloxane-based binder can consist of a single repeating sequence of siloxane units or be interrupted by non-siloxane parts, e.g. organic parts. It is preferred if the polysiloxane-based binder contains only Si-O repeating units.

The organic parts may comprise, for example, alkylene, arylene, poly(alkylene oxide), amide, thioether or combinations thereof, preferably the organic parts may comprise, for example, alkylene, arylene, poly(alkylene oxide), amide, or combinations thereof

By curable means that the polysiloxane-based binder comprises functional groups that enable a crosslinking reaction to take place either between polysiloxane-based binder molecules or via a crosslinking agent.

Any polysiloxane-based binder is preferably an organopolysiloxane with terminal and/or pendant curing-reactive functional groups. A minimum of two curing-reactive functional groups per molecule is preferred. Examples of curing-reactive functional groups are silanol, alkoxy, acetoxy, enoxy, ketoxime alcohol, amine, epoxy and/or isocyanate. A preferred polysiloxane-based binder contains curing-reactive functional groups selected from silanol, alkoxy or acetoxy groups. The curing reaction is typically a condensation cure reaction. The polysiloxane-based binder optionally comprises more than one type of curing-reactive group and may be cured, for example, via both condensation cure and amine/epoxy curing.

A preferred polysiloxane-based binder present in the fouling release coating compositions of the present invention is represented by formula (D1) below: 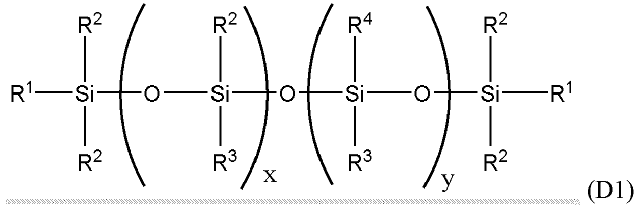 wherein
each R¹ is independently selected from a hydroxyl group, C₁₋₆-alkoxy group, C₁₋₆-hydroxyl group, C₁₋₆-epoxy containing group, C₁₋₆ amine group, or O-Si(R⁵)_{3-z} (R⁶)_{z} each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹; each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

Preferably R¹ is selected from a hydroxyl group and O-Si(R⁵)_{3-z}(R⁶)_{z}, wherein R⁵ is a C₁-C₆ alkoxy group, R⁶ is C₁₋₆ alkyl and z is 0 or an integer from 1-2. More preferably R¹ is selected from a hydroxyl group and O-Si(R⁵)_{3-z}(R⁶)_{z}, wherein R⁵ is a C₁-C₃ alkoxy group, R⁶ is C₁₋₃ alkyl and z is 0 or an integer from 1-2. Still more preferably R¹ is a hydroxyl group.

Preferably R² is a C₁₋₁₀ alkyl group. More preferably R² is a C₁₋₄ alkyl group, still more preferably a C₁₋₂ alkyl group, and yet more preferably a methyl group. Preferably each R² is the same.

Preferably R³ is a C₁₋₁₀ alkyl group. More preferably R³ is a C₁₋₄ alkyl group, still more preferably a C₁₋₂ alkyl group, and yet more preferably a methyl group. Preferably each R³ is the same.

Preferably R⁴ is a C₁₋₁₀ alkyl group. More preferably R⁴ is a C₁₋₄ alkyl group, still more preferably a C₁₋₂ alkyl group, and yet more preferably a methyl group. Preferably each R⁴ is the same.

Still more preferably R¹ is a hydroxyl group and R², R³ and R⁴ are each methyl groups.

Another preferred polysiloxane-based binder present in the fouling release coating compositions of the present invention is represented by formula (D2) below: 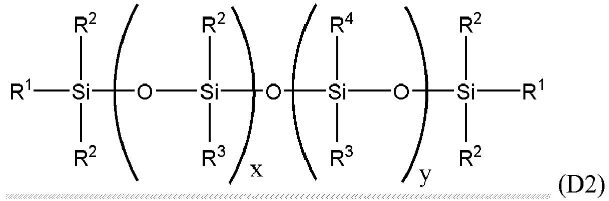 wherein
each R¹ is independently selected from a hydroxyl group, C₁₋₆-alkoxy group or O-Si(R⁵)_{3-z} (R⁶)_{z}
each R² to R⁴ are methyl;
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

Another preferred polysiloxane-based binder present in the fouling release coating compositions of the present invention is represented by formula (D3) below: 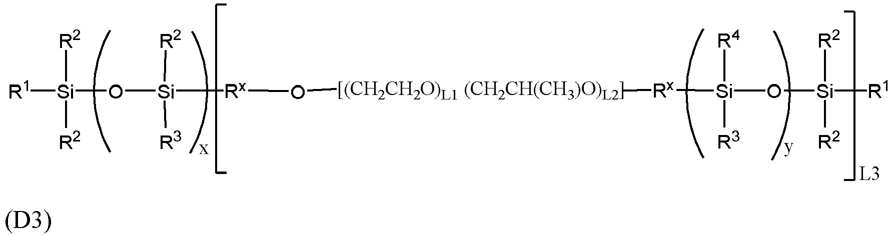 wherein R¹, R², R³, R⁴ and x and y are as defined for (D1), R^{x} is C₂₋₃ alkyl, each L1 is 0 to 50, each L2 is 0 to 50 with the proviso that L1+L2 is 2 to 50, preferably 4 to 40, more preferably 4 - 20, most preferably 4-10 and L3 is 1-200, preferably 2-100, most preferably 5-50. The polysiloxane parts must form a minimum of 50 wt% of the molecule.

Preferably the polysiloxane-based binder of the present invention is represented by formula D1. Preferably the polysiloxane-based binder A, B and/or C of the present invention is a polydimethylsiloxane.

The skilled person will be aware that the polysiloxane-based binder may contain low amounts of impurities, such as cyclic siloxanes, such as D4, D5 and D6 cyclosiloxanes, that are residues from polysiloxane synthesis, where the name (D4, D5, or D6) refers to the number of repeating Si-O units in the cyclic polysiloxane (i.e. 4, 5 or 6 repeating Si-O units in the cyclic polysiloxane respectively). From a health, safety, and environmental aspect, it is preferred to limit the amount of cyclic polysiloxanes present in the coating. In one preferred embodiment the polysiloxane-based binder contains less than 5% of cyclic polysiloxanes, preferable less than 2%, more preferably less than 1%. In one particularly preferred embodiment, the polysiloxane-based binder is free of cyclic polysiloxanes.

The polysiloxane polymers are preferably linear.

The polysiloxane-based binder system comprises at least two polysiloxane-based binders A and B. The weight average molecular weight of the polysiloxane-based binder A is preferably 35,000 or less, such as 10,000 to 35,000, more preferably 15,000 to 30,000, especially 18,000 to 28,000 g/mol.

The number average Mw of binder A is preferably 15,000 or less, such as 3,000 to 14,000 g/mol, still more preferably 5,000-12,000 g/mol.

The number average Mw of binder B is 40,000 or more, such as 40,000 to 80,000 g/mol, still more preferably 45,000-70,000 g/mol.

The weight average Mw of binder B is preferably 70,000 or more, such as 80,000 to 150,000 g/mol, still more preferably 86,000-120,000 g/mol.

Alternatively viewed, the viscosity of the polysiloxane-based binder A is preferably 1500 mPas or less, such as 300 to 1,500 mPas, more preferably 300 to 1,000 mPas, especially 400 to 800 mPas.

The viscosity of binder B is 10,000 mPas or more, such as 10,000 to 30,000 mPas, still more preferably 15,000-25,000 mPas.

In a preferred embodiment the binder system of the invention further comprises a polysiloxane binder C. The weight average molecular weight of the polysiloxane-based binder C is 40,000 to 70,000, e.g. 40,000 to 69,000, especially 45,000 to 65,000 g/mol.

The number average Mw of binder C is preferably 20,000 to 40,000 g/mol, still more preferably 25,000-35,000 g/mol.

Alternatively viewed, the viscosity of the polysiloxane-based binder C is preferably 2000 to 9500, more preferably 2500 to 8000, especially 3,000 to 5000 mPas.

The binder system preferably forms at least 35 wt% of the fouling release coating composition (dry weight), such as at least 40 wt%, especially at least 45 wt%, e.g. 35 to 75 wt% of the fouling release coating composition (dry weight).

Where there are two binders it is preferred each binder forms at least 15 wt% of the binder system, preferably each forms at least 30 wt%, further preferred at least 40 wt.% of the binder system. It is preferred that the wt ratio of binder A to binder B is in the range of 30:70 to 70:30, preferably 40:60 to 60:40, more preferably 45:55 to 55:45.

Alternatively viewed, each binder forms at least 20 wt% of the fouling release coating composition (dry weight).

Where there are three binders it is preferred each binder forms at least 15 wt% of the binder system, preferably each forms at least 20 wt% of the binder system. In one embodiment there may be 20 to 30 wt% of binder A, 35 to 55 wt% binder B and 25 to 35 wt% binder C in the binder system.

It is preferred if the viscosity of the binder system is 400 to 30,000 mPas, more preferably 1000 - 25,000 mPas, even more preferred 2000 - 15,000 mPas, such as 2500 - 10,000 mPas.

It is preferred if the weight average molecular weight of the binder system is less than 150,000, such as 25,000 - 100,000 g/mol, more preferred 30,000 - 80,000, even more preferred 40,000 - 70,000 g/mol.

### Hydrophilic modified polysiloxane

The coating composition of the invention may additionally comprise a hydrophilic modified polysiloxane. It will be appreciated that this component is different from the polysiloxane binder components A, B and C discussed above..

It should be understood that the hydrophilic modified polysiloxane does not contain silicone reactive groups such as Si-OH groups, Si-OR (alkoxy) groups etc. that can react with the binder or the cross-linker (if present) at relevant curing temperatures (0 - 40 °C), hence the hydrophilic-modified polysiloxane is intended to be non-reactive in the curing reaction, in particular with respect to the binder components. Generally, this component is not regarded as part of the binder system.

Hydrophilic-modified polysiloxanes are widely used as surfactants and emulsifiers due to the content of both hydrophilic and lipophilic groups in the same molecule. A hydrophilic modified polysiloxane according to the present invention is a polysiloxane that is modified with hydrophilic groups to make it more hydrophilic compared to the corresponding unsubstituted polysiloxane having the same number of polysiloxane units. The hydrophilicity can be obtained by modification with hydrophilic groups such as ethers (e.g. polyoxyalkylene groups such as polyethylene glycol and polypropylene glycol), alcohols (e.g. poly(glycerol), amides (e.g. pyrroliodone, polyvinylpyrrolidone, (meth)acrylamide) acids (e.g. carboxylic acids, poly (meth) acrylic acid), amines (e.g. polyvinylamine, (meth) acrylic polymers comprising amine groups). Typically, the hydrophilic-modified polysiloxane is an oil.

In one preferred embodiment the hydrophilic groups are non-ionic.

'Non-ionic' herein means that the hydrophilic-modified polysiloxane does not contain any salt moieties; in particular, it typically does not contain any metal cations.

The hydrophilicity of non-ionic hydrophilic modified polysiloxanes can be determined in accordance with the HLB (hydrophilic-lipophilic balance) parameter. If the hydrophilic modified polysiloxane of the present invention is non-ionic, the HLB (hydrophilic-lipophilic balance) is in the range 1-12, preferably 1.0-10, more preferably 1.0-8.0, most preferably 2.0-7.0. In a particular embodiment, the non-ionic hydrophilic modified polysiloxane has an HLB in the range 3.0-6.0.

The HLB is herein typically determined according to Griffin's model using the equation "wt% hydrophilic groups"/5 (Reference: Griffin, W. C. Calculation of HLB values of non-ionic surfactants, J. Soc. Cosmet. Chem. 1954, 5, 249 - 256). The HLB parameter is a well-established parameter for non-ionic surfactants and is readily available from the suppliers of commercially available hydrophilic modified polysiloxanes. The higher surfactant HLB value, the more hydrophilic it is. By wt% hydrophilic groups means the wt% of hydrophilic groups in the hydrophilic modified polysiloxane.

One function of the hydrophilic modified polysiloxane is to facilitate the dissolution and transport of any biocide to the surface of the coating film. In addition, it is also well known that formation of a hydrated layer at the coating-water interphase is important for the fouling protection performance.

If the hydrophilicity of the hydrophilic modified polysiloxane is too high, for example due to a high amount of hydrophilic groups in the molecule, this could lead to an early depletion of the biocide(s) and the hydrophilic modified polysiloxane due to a too high leaching rate. A high hydrophilicity will also give poor compatibility with the polysiloxane based binder matrix, especially if high oil amounts (more than 10 wt.%) are used, giving poor film homogeneity and poor adhesion.

The ways to control the leach rate of the biocide and the hydrophilic modified polysiloxane include the molecular weight of the hydrophilic modified polysiloxane, the hydrophilicity and the miscibility with the binder. A very low molecular weight hydrophilic modified polysiloxane tends to allow a high leach rate, while too high molecular weight may not allow the leaching of the biocide and the hydrophilic modified polysiloxane to be of the desired rate.

Hence, in a preferred embodiment, the hydrophilic modified polysiloxane has a number average molecular weight (Mn) in the range of 500-18,000 g/mol, such as in the range of 1000-16,000 g/mol, particularly in the ranges 2000-15,050 g/mol or 4000-15,050 g/mol . Further suitable Mn ranges for the hydrophilic modified polysiloxane include 500-15,000 g/mol, 1,000-13,000 g/mol or 3,000-10,000 g/mol. Number average molecular weight (Mn) values referred to herein correspond to the experimentally obtained values, e.g. by GPC measured relative to a polystyrene standard. The method is given in the experimental section below.

In a preferred embodiment, the hydrophilic modified polysiloxane has a weight average molecular weight (Mw) of 1,000-50,000 g/mol, preferably in the ranges of 2,000-45,000 g/mol, 3,000-42,000 g/mol, 4,000-40,000 g/mol, or 5,000-40,000 g/mol. Further suitable ranges include 5,000-30,000 g/mol, e.g. 5,000-25,000 g/mol or 10,000-20,000 g/mol. Weight average molecular weight (Mw) values referred to herein correspond to the experimentally obtained values, e.g. by GPC measured relative to a polystyrene standard. The method is given in the experimental section below.

It is also preferred if the hydrophilic modified polysiloxane has a viscosity in the range of 20-4,000 mPa-s, such as in the range of 30-3,000 mPa-s, in particular in the range of 50-2,500 mPa-s, when measured according to the method given in the experimental section.

The hydrophilic modified polysiloxane may be included in the coating composition in an amount of 1.0-30 wt% by dry weight, preferably 2.0 to 20 by dry weight%, further preferred 6 to 15 wt% by dry weight. Where there are two or more different types of hydrophilic modified polysiloxanes, these amounts refer to the total sum of hydrophilic modified polysiloxane components.

Of particular interest are those hydrophilic-modified polysiloxanes in which the relative weight of the hydrophilic moieties is 5% or more of the total weight (e.g. 5-60%), such as 6% or more (e.g. 6-50%), in particular 10% or more (e.g. 10-40%) of the total weight of the hydrophilic-modified polysiloxane.

The wt.% of the hydrophilic moieties can be calculated based on the stoichiometric ratio of starting materials in the hydrophilic modified polysiloxane synthesis, or it can be determined using analytical techniques such as IR or NMR

If there is a molar excess of a reactant then such a molar excess is not counted when determining the wt.% of hydrophilic moieties. Only those monomers that can react based on the stoichiometry of the reaction are counted.

The hydrophilic modified polysiloxane may contain low amounts of impurities, such as cyclic siloxanes, such as D4, D5 and D6 cyclosiloxanes, that are residues from polysiloxane synthesis, where the name (D4, D5 and D6) refers to the number of repeating Si-O units in the cyclic polysiloxane (i.e. 4, 5 or 6 repeating Si-O units in the cyclic polysiloxane respectively). From a health, safety, and environmental aspect it is preferred to limit the amount of cyclic polysiloxanes present in the coating composition. In one preferred embodiment, the hydrophilic modified polysiloxane contains less than 5% of cyclic polysiloxanes, preferable less than 2%, more preferably less than 1%. In one particularly preferred embodiment, the hydrophilic modified polysiloxane is free of cyclic polysiloxanes.

In one preferred embodiment the hydrophilic modified polysiloxane is a polyether modified polysiloxane.

Preferably, the polyether groups include at least 3 repeating units, such as at least 5 repeating units. In many interesting embodiments, the oligomers or polymers include 5-100 repeating units, such as 5-50, or 8-50, or 8-20 repeating units.

In some preferred embodiments, the polyether groups (I.e. oligomeric or polymeric groups) have a number average molecular weight (n) in the range of 100-2500 g/mol, such as in the range of 200-2000 g/mol, in particular in the range of 300-2000 g/mol, or in the range of 400-1000 g/mol.

Of particular interest are those polyether-modified polysiloxanes in which the relative weight of the polyether moieties is 5% or more of the total weight (e.g. 5-60%), such as 6% or more (e.g. 6-50%), in particular 10% or more (e.g. 10-40%) of the total weight of the polyether-modified polysiloxane.

In one variant hereof, the polyether-modified polysiloxane is a polysiloxane having grafted thereto poly(oxyalkylene) chains. An illustrative example of the structure of such polyether-modified polysiloxane is formula (X): 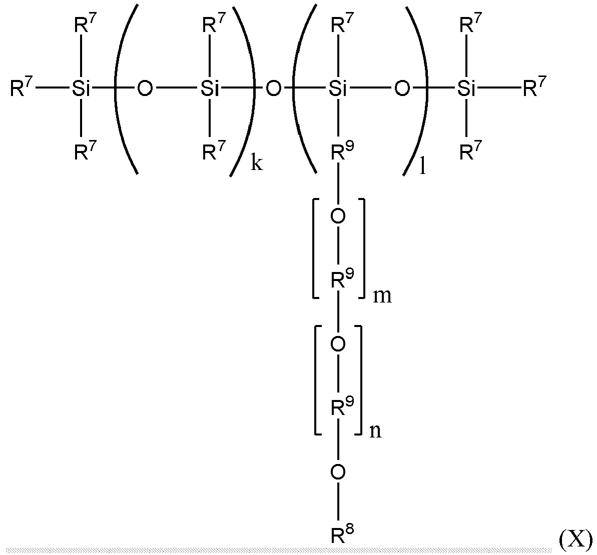
wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃, - CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-, - CH₂CH(CH₃), -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, l is 1-60 and k+l is 1-240; and
n is 0-50, m is 0-50 and m+n is 1-50.

In particular R⁷ is methyl;
each R⁸ is independently selected from -H or C₁₋₄-alkyl or -C(=O)CH₃ ;
each R⁹ is -CH₂CH₂-, or -CH₂CH₂CH₂-, or -CH₂CH(CH₃)-);
k is 0-240, l is 1-60 and k+l is 1-240; and
n is 0-50, m is 0-50 and m+n is 1-50.

It is preferred if all R⁷ groups are the same.

Examples of commercially available polyether-modified polysiloxanes of this type are KF352A, KF353, KF945, KF6012, KF6017 from ShinEtsu. XIAMETER OFX-5220, DOWSIL OFX-5247, XIAMETER OFX-5329, XIAMETER OFX-5330 from DOW.

In another variant hereof, the polyether-modified polysiloxane is a polysiloxane having incorporated in the backbone thereof poly(oxyalkylene) chains. An illustrative example of the structure of such hydrophilic-modified polysiloxanes is formula (Y): 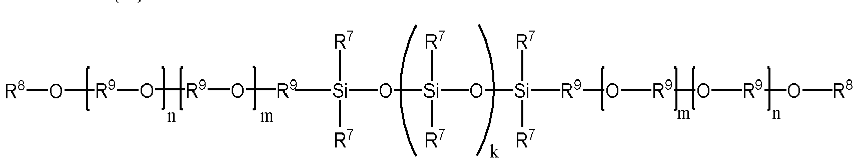
wherein each R⁷ is independently selected from C₁₋₅-alkyl (including linear or branched hydrocarbon groups) and aryl (e.g. phenyl (-C₆H₅)), in particular methyl;
each R⁸ is independently selected from -H, C₁₋₄-alkyl (e.g. -CH₃, -CH₂CH₃, - CH₂CH₂CH -CH(CH₃)₂, -CH₂CH₂CH₂CH₃), phenyl (-C₆H₅), and C₁₋₄-alkylcarbonyl (e.g. -C(=O)CH₃, C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-, - CH₂CH(CH₃)-, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂ - and -CH₂CH(CH₃)-);
k is 0-240;
and n is 0-50, m is 0-50 and m+n is 1-50.

In particular, wherein R⁷ is methyl;
each R⁸ is independently selected from -H or C₁₋₄-alkyl or -C(=O)CH₃;
each R⁹ is -CH₂CH₂-, -CH₂CH(CH₃)-, or -CH₂CH₂CH₂-;
k is 0-240;
and n is 0-50, m is 0-50 and m+n is 1-50.

It is preferred if all R⁷ groups are the same.

Commercially available hydrophilic-modified polysiloxanes of this type are DOWSIL 2-8692 and XIAMETER OFX-3667 from DOW.

In still another variant, the polyether-modified polysiloxane is a polysiloxane having incorporated in the backbone thereof polyoxyalkylene chains and having grafted thereto polyoxyalkylene chains. An illustrative example of the structure of such hydrophilic- modified polysiloxanes is formula (Z) : 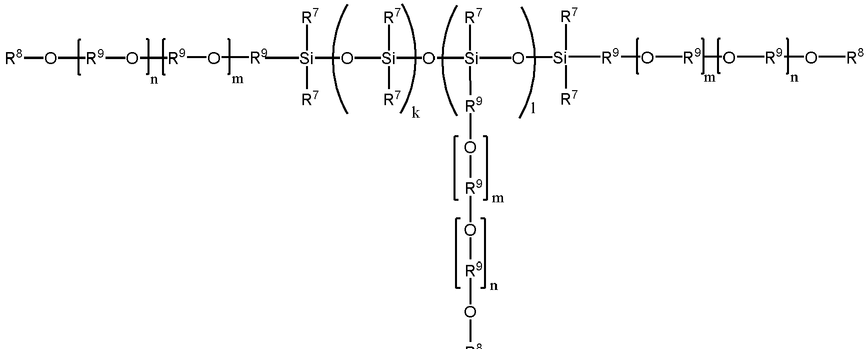
wherein each R⁷ is independently selected from C₁₋₅-alkyl (including linear or branched hydrocarbon groups) and aryl (e.g. phenyl (-C₆H₅)), In particular methyl;
each R⁸ is independently selected from -H, C₁₋₄-alkyl (e.g. -CH₃, -CH₂CH₃, - CH₂CH₂CH₃, -CH(CH₃)₂, -CH₂CH₂CH₂CH₃), phenyl (-C₆H₅), and C₁₋₄-alkylcarbonyl (e.g. -C(=O)CH₃, - C(=O)CH₂CH₃ and -C(=O)CH₂CH₂CH₃), in particular -H, methyl and -C(=O)CH₃;
each R⁹ is independently selected from C₂₋₅-alkylene (e.g. -CH₂CH₂-, - CH₂CH(CH₃) -, -CH₂CH₂CH₂-, -CH₂CH₂CH₂CH₂-, -CH₂CH(CH₂CH₃)-), arylene (e.g. 1,4-phenylene) and C₂₋₅-alkylene substituted with aryl (e.g. 1-phenyl ethylene), in particular from C₂₋₅-alkylene such as -CH₂CH₂- and -CH₂CH(CH₃)-);
k is 0-240, l is 1-60 and k+l is 1-240;
n is 0-50, m is 0-50 and m + n is 1-50.

In particular, R⁷ is methyl;
each R⁸ is -H, or C₁₋₄-alkyl or -C(=O)CH₃;
each R⁹ is -CH₂CH₂-, -CH₂CH₂CH₂-, -or -CH₂CH(CH₃)-;
k is 0-240, y is 1-60 and x+y is 1-240;
n is 0-50, m is 0-50 and m + n is 1-50.

In the above structures (X), (Y) and (Z), the groups -CH₂CH(CH₃)-, - CH₂CH(CH₂CH₃)-, etc. may be present in any of the two possible orientations. Similarly, it should be understood that the segments present k and 1 times typically are randomly distributed in the polysiloxane structure.

In these embodiments and variants, the polyether or poly(oxyalkylene) is preferably selected from polyoxyethylene, polyoxypropylene and poly(oxyethylene-co-oxypropylene), which sometimes are referred to as polyethylene glycol, polypropylene glycol and poly(ethylene glycol-co-propylene glycol). Hence, in the above structures (X), (Y) and (Z), each R⁹ linking two oxygen atoms is preferably selected from -CH₂CH₂- and -CH₂CH(CH₃)-, whereas each R⁹ linking a silicon atom and an oxygen atom preferably is selected from C₂₋₅-alkyl.

In some embodiments of the above structures (X), (Y) and (Z), R⁸ is preferably not hydrogen.

It should be understood that the one or more polyether modified polysiloxanes may be of different types, e.g. two or more of the types described above.

In another preferred embodiment the hydrophilic modified polysiloxane comprises polyglycerol groups or pyrrolidone groups.

### Crosslinking and/or curing agent

The polysiloxane-based binder of the present invention is curable and contains curing-reactive functional groups such as silanol, alkoxysilane, ketoxime, carbinol, amine, epoxy and/or alkoxy groups.

Preferably the polysiloxane-based binder contains at least two curing-reactive functional groups. Optionally the polysiloxane-based binder comprises more than one type of curing-reactive functional group. Preferably the polysiloxane-based binder comprises a single type of curing-reactive functional group. The appropriate crosslinking and/or curing agents are chosen depending on the curing-reactive functional groups present in the polysiloxane-based binder.

In preferred polysiloxane-based binders the curing-reactive functional groups are silanol, or alkoxysilane. In still further preferred polysiloxane-based binders the curing-reactive functional groups are silanol.

It may be necessary to add a crosslinker to obtain the desired crosslinking density. If the curing-reactive functional groups are silanol, a preferred crosslinking agent is an organosilicon compound represented by the general formula shown below, a partial hydrolysis-condensation product thereof, or a mixture of the two:

R_{d}-Si-K_{4-d}

wherein,
each R is independently selected from a monovalent hydrocarbon group of 1 to 6 carbon atoms, C₁₋₆ alkyl substituted by poly(alkylene oxide) or a polysiloxane of the structure (O-(CR^{D}₂)_{r'})_{r1'} - (O-(CR^{D}₂)_{s'})_{s1'}-(Si(R^{PP})₂-O)_{t'}-Si(R^{PP})₃; wherein r', rl', s' and s1' is an integer from 0-10, each R^{D} is independently selected from H or C₁₋₄ alkyl, each R^{PP} is independently selected from C₁₋₁₀ alkyl, C₆₋₁₀ aryl, C₇₋₁₀ alkylaryl and t' is an integer from 1 to 50.;
each K is independently selected from a hydrolysable group such as an alkoxy group; and d is 0, 1 or 2, more preferably 0 or 1.

Preferred crosslinkers of this type include tetraethoxysilane, vinyltris(methylethyloximo)silane, methyltris(methylethyloximo)silane, vinyltrimethoxysilane, methyltrimethoxysilane and vinyltriisopropenoxysilane as well as hydrolysis-condensation products thereof.

If the curing-reactive functional groups are di or tri-alkoxy, a separate crosslinking agent is generally not required.

The crosslinking agent is preferably present in amount of 0-10 wt% of the total dry weight of the coating composition, preferably 2.0 to 8.0 wt%. Suitable crosslinking agents are commercially available, such as Silicate TES-40 WN from Wacker and Dynasylan A from Evonik.
If the curing-reactive functional groups are carbinol, preferred curing agents are monomeric isocyanates, polymeric isocyanates and isocyanate prepolymers. Polyisocyanates are preferred over monomeric isocyanates because of lower toxicity. Polyisocyanates can for example be based on diphenylmethane diisocyanate (MDI), toluene diisocyanate (TDI), hexamethylene diisocyanate (HDI) and isophorone diisocyanate (IPDI) chemistry. These are, for example, supplied under the tradename Desmodur by Covestro and Tolonate by Vencorex. Examples of polyisocyanates are Desmodur N3300, Desmodur 3390 BA/SN, Desmodur N3400, Desmodur N3600 Desmodur N75, Desmodur XP2580, Desmodur Z4470, Desmodur XP2565 and Desmodur VL, supplied by Covestro.

Polyisocyanates can be made with different NCO-functionality. The NCO-functionality is the amount of NCO-groups per polyisocyanate molecule or isocyanate prepolymer molecule. Polyisocyanates curing agents with different NCO-functionality can be used.

The curing agent is preferably present in an amount of 0.8-2.5 equivalents (equiv) NCO groups relative the amount of hydroxyl groups, preferably 0.9-2.0 equiv, more preferably 0.95-1.7 equiv, even more preferably 1-1.5 equiv.

If the curing-reactive functional groups are amine, epoxy or isocyanate, the curing agents are preferably amine, sulfur or epoxy functional.

The curing agents can also be dual curing agents containing, for example, both amine/sulphur/epoxy/isocyanate and an alkoxysilane. Preferred dual curing agents are represented by the general formula below: 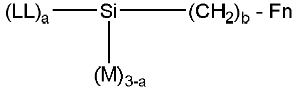 wherein
LL is independently selected from an unsubstituted or substituted monovalent hydrocarbon group of 1 to 6 carbon atoms;
each M is independently selected from a hydrolysable group such as an alkoxy group; a is 0, 1 or 2, preferably 0 or 1;
b an integer from 1 to 6; and
Fn is an amine, epoxy, glycidyl ether, isocyanate or sulphur group.

Preferred examples of such dual curing agents include 3-isocyanatopropyltrimethoxysilane, 3- isocyanatopropyltriethoxysilane, 3-aminopropyltrimethoxysilane, 3-aminopropyltriethoxysilane, (3-glycidoxypropyl)trimethoxysilane, 3-mercaptopropyltrimethoxysilane. One particularly preferred curing agent is 3-aminopropyltriethyoxysilane such as Dynasylan AMEO from Evonik.

This type of dual-curing agents can be used as a separate curing agent or be used to end-cap the polysiloxane-based binder so that the end-groups of the polysiloxane-based binder are modified prior to the curing reaction. For example, the mixing of the polysiloxane-based binder and the curing agent can be carried out shortly before application of the coating to an article, e.g. an hour or less before coating or the polysiloxane-based binder can be supplied in curable form but kept dry in order to prevent premature curing. In some compositions the curing agent/end capping agent is preferably supplied separately to the rest of the coating composition to prevent curing before the coating has been applied to the object. Hence the coating composition of the invention can be supplied as a multipack (preferably three pack) formulation discussed in more detail below.

### Catalyst Component (iii)

In order to assist the curing process, the coating composition of the invention comprises a catalyst component (iii). The catalyst can be organic or inorganic or an organometallic.

### Metal catalyst

In one embodiment, the coating composition of the invention comprises a metal catalyst. Representative examples of catalysts that can be used include Sn, Zn, Li, K, Bi, Fe or Zr containing catalysts, e.g. salts and organometallic complexes thereof. The salts preferably are salts of long-chain carboxylic acids and/or chelates or organometal salts.

The metal catalysts are preferably tin (IV), bismuth(III), iron(II), iron(III), zinc(II), zirconium(IV), potassium or lithium compounds, Sn (IV), bismuth (III) and lithium being particularly preferred.

Examples of anionic organic radicals include methoxide, ethoxide, n-propoxide, isopropoxide, n-butoxide, isobutoxide, sec-butoxide, tert-butoxide, triethanolaminate, and 2-ethylhexyloxide radicals; carboxylate radicals such as the acetate, formate, n-octoate, 2-ethylhexanoate, 2,4,4-trimethylpentanoate, 2,2,4-trimethylpentanoate, 6-methylheptanoate, oleate, ricinoleate, palmitate, hexoate, hexadecanate, 2-ethylhexanoate, benzoate, 1,4-dibenzoate, stearate, acrylate, laurate, methacrylate, 2-carboxyethylacrylate, oxalate, 10-undecylenate, dodecanoate, citrate, 3-oxopentanoate, 3-oxobutanoate, and neodecanoate radicals; amide radicals such as the dimethylamide, diethylamide, ethylmethylamide, and dipropylamide radicals; the lactate radical; trialkylsiloxy radicals, more particularly trimethylsiloxy and triethylsiloxy radicals, and also carbonate radicals (O-CO-OR') and carbamate radicals (O-CO-NR'2), where R' may be identical or different and are monovalent or divalent, optionally substituted hydrocarbon radicals and, furthermore, may be hydrogen, trimethoxysilylpropyl, triethoxysilylpropyl, dimethoxymethylsilylpropyl, diethoxymethylsilylpropyl, N-[3-(trimethoxysilyl)propyl]-2-aminoethyl, N-[3-(triethoxysilyl)propyl]-2-aminoethyl, N-[3-(dimethoxymethylsilyl)propyl]-2-aminoethyl or N-[3-(diethoxymethylsilyl)propyl]-2-aminoethyl radicals.

Examples of metal salt compounds are dibutyltin diacetate, dioctyltin dilaurate, dibutyltin dilaurate, dibutyltin oxide, bismuth(III) 2-ethylhexanoate, bismuth(III) neodecanoate, bismuth(III) acetate, bismuth (III) octanoate, iron(II) acetate, iron(III) tert-butoxide, iron(III) citrate, iron(II) lactate, iron(II) oxalate, iron(III) oxalate, iron(III) 2-ethylhexanoate, zinc(II) acetate, zinc(II) formate, zinc(II) benzoate, zinc(II) 2-ethylhexanoate, zinc(II) n-octoate, zinc(II) stearate, zinc(II) ethoxide, zinc(II) acrylate, zinc(II) methacrylate, zinc (II) naphthenate, zinc(II) oxalate, zinc(II) 10-undecylenate, zinc(II) 3-oxopentanoate, zinc(II) 3-oxobutanoate, zirconium(IV) acetate, zirconium(IV) 2-ethylhexanoate, zirconium(IV) lactate, zirconium(IV) n-butoxide, zirconium(IV) tert-butoxide, zirconium(IV) isopropoxide, zirconium(IV) n-propoxide, zirconium(IV) 2-carboxyethylacrylate, zirconium(IV) tetrakis(diethylamide), zirconium(IV) tetrakis(ethylmethylamide), zirconium(IV) bis(diethylcitrate)-di-n-propoxide.

Examples of metal chelate compounds bismuth(III) 2,2,6,6-tetramethyl-3,5-heptanedionate, bismuth(III) acetylacetonate, iron(II) acetylacetonate, iron(III) acetylacetonate, iron(III) 2,2,6,6-tetramethyl-3,5-heptanedionate, iron(II) 2,2,6,6-tetramethyl-3,5-heptanedionate, zinc(II) hexafluoroacetylacetonate, zinc(II) 1,3-diphenyl-1,3-propanedionate, zinc(II) 1-phenyl-5-methyl-1,3-hexanedionate, zinc(II) 1,3-cyclohexanedionate, zinc(II) 2-acetylcyclohexanonate, zinc(II) 2-acetyl-1,3-cyclohexanedionate, zinc(II) ethylsalicylate, zinc(II) diethylmalonate, zinc(II) ethylacetoacetate, zinc(II) benzylsalicylate, zinc(II) acetylacetonate, and zinc(II) 2,2,6,6-tetramethyl-3,5-heptanedionate, tin(II) acetylacetonate, zirconium(IV) acetylacetonate, zirconium(IV) 2,2,6,6-tetramethyl-3,5-heptanedionate, zirconium(IV) trifluoroacetylacetonate, and zirconium(IV) hexafluoroacetylacetonate.

Examples of suitable tin catalysts are dibutyltin dilaurate, dibutyltin dioctoate, dibutyltin diacetate, dioctyltin dilaurate. Examples of commercially available tin catalysts include BNT-CAT 400 and BNT-CAT 500 from BNT Chemicals, FASCAT 4202 from PMC Organometallix and Metatin Katalysator 702 from DOW.

Examples of suitable lithium catalysts are lithium 2-ethylhexanoate and lithium neodecanoate. Example of commercially available lithium catalyst includes Borchers Deca Lithium 2 manufactured by Borchers sas.

Examples of suitable potassium catalysts are potassium 2-ethylhexanoate and potassium neodecanoate. Examples of commercially available potassium catalysts include 15% Potassium Hex-Cem^{®} EU manufactured by Borchers sas and TIB KAT K30 from TIB Chemicals.

Examples of suitable zinc catalysts are zinc 2-ethylhexanoate, zinc naphthenate and zinc stearate. Examples of commercially available zinc catalysts include K-KAT XK-672 and K-KAT670 from King Industries and Borchi Kat 22 from Borchers.

Examples of suitable bismuth catalysts are organobismuth compounds such as bismuth 2-ethylhexanoate, bismuth octanoate and bismuth neodecanoate. Examples of commercial organobismuth catalysts are Borchi Kat 24 and Borchi Kat 315 from Borchers. K-KAT XK-651 from King Industries, Reaxis C739E50 from Reaxis and TIB KAT 716 from TIB Chemicals.

Other suitable catalysts are iron catalysts such as iron stearate and iron 2-ethylhexanoate, and zirconium catalysts such as zirconium naphthenate, tetrabutyl zirconate, tetrakis(2- ethylhexyl) zirconate, triethanolamine zirconate, tetra(isopropenyloxy)-zirconate, zirconium tetrabutanolate, zirconium tetrapropanolate and zirconium tetraisopropanolate. Further suitable catalysts are zirconate esters.

In one preferred embodiment the catalyst is tin free.

Preferably the metal catalyst is present in the coating composition of the invention in an amount of 0.05 to 5.0 wt% based on the total dry weight of the coating composition, more preferably 0.1 to 2.0 wt%.

### Organic catalysts

The catalyst may also be organic, such as a low molecular weight amidine or a low molecular weight amine compound such as an aminosilane. The term low molecular weight means that its molecular weight is less than 1000 g/mol, such as 50 to 500 g/mol, preferably 100 to 400g/mol.

Suitable amidines are compounds comprising the motif:

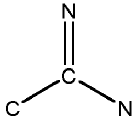

Preferably the amidine is represented by the following general formula: 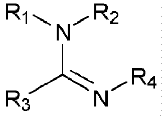
wherein R₁, R₂, R₄ are each independently selected from hydrogen, monovalent organic groups, monovalent heteroorganic groups, and combinations thereof;
R³ is a monovalent organic group, monovalent heteroorganic groups, and combinations thereof;
and/or wherein any two or more of R₁, R₂, R₃, R₄ optionally can be bonded together to form a ring structure.
R₁, R₂ and R₄ are preferably hydrogen or C1-6 alkyl or phenyl groups.
R₃ is C₁₋₆ alkyl or phenyl groups.

Still more preferably R₂+R₄ taken together form a ring and/or R₁+R₃ taken together form a ring. Such rings are preferably aliphatic 5-7 membered rings.

Preferred options include cyclic amidines, preferably bicyclic amidines such as 1,8-diazabicyclo-5.4.0-7-undecene (DBU)). The chemical structure of DBU is presented below:

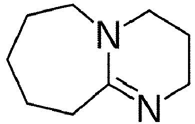

The catalyst may also be a low molecular weight organic amine compound, such as triethylamine, a cyclic amine, tetramethylethylenediamine, 1,4-ethylenepiperazine and pentamethyldiethylenetriamine.

Preferred amines are however aminosilanes such as aminoalkyltrialkoxysilane such as 3-aminopropyltriethoxysilane or 3-aminopropyltrimethoxy silane, or bis(alkyltrialkoxysilyl)amine preferably comprises bis(3-propyltrimethoxysilyl)amine or bis(3-propyltriethoxysilyl)amine. Another option is N,N-dibutylaminomethyl-triethoxysilane.

Suitable aminosilanes are of general formula (I) or (II)

(I) Y-R_{(4-z)}SiX_{z}

wherein z is an integer from 1 to 3,

(II) Y-R_{(3-y)}R¹SiX_{y}

wherein y is an integer from 1 to 2,
each R is a hydrocarbyl group having 1 to 12 C atoms optionally containing an ether or amino linker,
R¹ is a hydrocarbyl group having 1 to 12 C atoms;
each X independently represents an alkoxy group.
Y is an amino bound to R.

The Y group can bind to any part of the chain R.

The amino groups are preferably N-di-C1-6-alkyl or NH₂.

It is especially preferred if X is a C1-6 alkoxy group, especially methoxy or ethoxy group. It is also especially preferred if there are two or three alkoxy groups present. Thus, z is ideally 2 or 3, especially 3.

Subscript y is preferably 2.

R¹ is preferably CI-4 alkyl such as methyl.

R is a hydrocarbyl group having up to 12 carbon atoms. By hydrocarbyl is meant a group comprising C and H atoms only. It may comprise an alkylene chain or a combination of an alkylene chain and rings such as phenyl or cyclohexyl rings. The term "optionally containing an ether or amino linker" implies that the carbon chain can be interrupted by a -O- or -NH- group in the chain.

R is preferably an unsubstituted (other than Y obviously), unbranched alkyl chain having 2 to 8 C atoms.

A preferred silane general formula is therefore of structure (III)

(III) Y'-R'_{(4-z')}SiX'_{z}

wherein z' is an integer from 2 to 3,
R' is an unsubstituted, unbranched alkyl chain having 2 to 8 C atoms optionally containing an ether or amino linker,
Y' is an amino functional group bound to the R' group, and
X' represents an alkoxy group.

Examples of such silanes are the many representatives of the products manufactured by Degussa in Rheinfelden and marketed under the brand name of Dynasylan(R)D, the Silquest(R) silanes manufactured by Momentive, and the GENOSIL(R) silanes manufactured by Wacker.

Preferred aminosilanes include aminopropyltrimethoxysilane (Dynasylan AMMO; Silquest A-l 110), aminopropyltriethoxysilane (Dynasylan AMEO) or N-(2-aminoethyl)-3-aminopropyltrimethoxysilane (Dynasylan DAMO, Silquest A-l 120), N-(2-aminoethyl)-3-aminopropyltriethoxysilane, triamino- functional trimethoxysilane (Silquest A- 1130), bis(gamma- trimethoxysilylpropyl)amine (Silquest A-l 170), N-ethyl-gamma- aminoisobytyltrimethoxy silane (Silquest A-Link 15), N-phenyl-gamma- aminopropyltrimethoxysilane (Silquest Y-9669), 4-amino-3,3- dimethylbutyltrimethoxysilane (Silquest Y-l 1637), (N-cyclohexylaminomethyl)triethoxysilane (Genosil XL 926), (N-phenylaminomethyl)trimethoxysilane (Genosil XL 973), and mixtures thereof.

Other specific silanes of interest include 3 -Aminopropyltriethoxysilane, 3 - Aminopropyltrimethoxysilane, N-(Aminoethyl)-aminopropyltrimethoxysilane H₂NCH₂CH₂NHCH₂CH₂CH₂Si(OCH₃)₃, 3-aminopropylmethyldiethoxysilane, 3-(2-aminoethylamino)propylmethyldimethoxysilane (H₂NCH₂CH₂NHCH₂CH₂CH₂SiCH₃(OCH₃)₂).

The amount of component (ii) present in the coating composition may be present in an amount of 0.05 to 5.0 wt%, preferably 0.1 to 4.0 wt.%, such as 0.1 to 2.0 wt.%, more preferred 0.1 to 1.0 wt.% of the coating composition (dry weight).

### Antifouling agent/biocide (ii)

The fouling release coating composition of the present invention may comprise an antifouling agent /biocide.

The terms antifouling agent, biologically active compounds, antifoulant, biocide, toxicant are used in the industry to describe known compounds that act to prevent marine fouling on a surface. If present, the antifouling agent may be inorganic, organometallic or organic. Preferably, if present the antifouling agent is an organometallic antifouling agent. Suitable antifouling agents are commercially available.

Examples of inorganic antifouling agents include copper and copper compounds such as copper oxides, e.g. cuprous oxide and cupric oxide; copper alloys, e.g. copper-nickel alloys; copper salts, e.g. copper thiocyanate and copper sulphide.

Examples of organometallic antifouling agents include zinc pyrithione; organocopper compounds such as copper pyrithione, copper acetate, copper di(ethyl 4,4,4-trifluoro acetoacetate), copper naphthenate, oxine copper, copper nonylphenolsulfonate, copper bis(ethylenediamine)bis(dodecylbe nzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylene bis(dithiocarbamate) complexed with zinc salt [mancozeb].

Examples of organic antifouling agents include heterocyclic compounds such as 2-(tert-butylamino)-4-(cyclopropylamino)-6-(methylthio)-1,3,5-triazine [cybutryne], 4,5-dichloro-2-n-octyl-4-isothiazolin-3-one [DCOIT], encapsulated 4,5-dichloro-2-n-octyl-4-isothiazolin-3-one [DCOIT], 1,2-benzisothiazolin-3-one, 2-(thiocyanatomethylthio)-1,3-benzothiazole [benthiazole] and 2,3,5,6-tetrachloro-4-(methylsulphonyl) pyridine; urea derivatives such as 3-(3,4-dichlorophenyl)-1,1-dimethylurea [diuron]; amides and imides of carboxylic acids, sulphonic acids and sulphenic acids such as N-(dichlorofluoromethylthio)phthalimide, N-dichlorofluoromethylthio-N',N'-dimethyl-N-phenylsulfamide [dichlofluanid], N-dichlorofluoromethylthio-N',N'-dimethyl-N-p-tolylsulfamide [tolylfluanid] and N-(2,4,6-trichlorophenyl)maleimide; other organic compounds such as pyridine triphenylborane [TPBP], amine triphenylborane, 3-iodo-2-propynyl N-butylcarbamate [iodocarb], 2,4,5,6-tetrachloroisophthalonitrile, p-((diiodomethyl)sulphonyl) toluene and 4-bromo-2-(4-chlorophenyl)-5-(trifluoromethyl)-1H-pyrrole-3-carbonitrile [tralopyril] and quaternary ammonium salts.

Other examples of antifouling agents include tetraalkylphosphonium halogenides, guanidine derivatives, imidazole containing compounds such as 4-[1-(2,3-dimethylphenyl)ethyl]-1H-imidazole [medetomidine] and derivatives thereof, macrocyclic lactones including avermectins and derivatives thereof such as ivermectine, spinosyns and derivatives thereof such as spinosad, capsaicins and derivatives thereof such as phenyl capsaicin, and enzymes such as oxidase, proteolytically, hemicellulolytically, cellulolytically, lipolytically and amylolytically active enzymes.

Preferred antifouling agents are zinc pyrithione, copper pyrithione, zinc ethylenebis(dithiocarbamate) [zineb], 4,5-dichloro-2-n-octyl-4-isothiazolin-3-one [DCOIT] and encapsulated 4,5-dichloro-2-n-octyl-4-isothiazolin-3-one [DCOIT]. Particularly preferred antifouling agents are zinc pyrithione and copper pyrithione, particularly copper pyrithione.

If present, the biocide may form 1-20 % by dry weight of the total coating composition, preferably 1-15 %, 2-15 % or 3-12 % by dry weight of the total coating composition.

### Additive oil

The coating composition of the present invention optionally comprises an additive oil. Preferably the coating composition of the present invention comprises 0-20 wt% and more preferably 0.1-15 wt% additive oil, especially 1.0 to 10 wt%, based on the dry weight of the coating composition. The hydrophilic modified polysiloxane described herein is not considered an 'additive oil'. Additive oils are therefore oils which are different to the hydrophilic modified polysiloxane described herein.

Suitable unreactive additive oils are silicone oils such as methylphenyl silicone oil, petroleum oils, polyolefin oils, polyaromatic oils, fluoro resins such as polytetra- fluoroethylene or fluid fluorinated alkyl- or alkoxy-containing polymers, or lanolin and lanolin derivatives and other sterol(s) and/or sterol derivative(s) as disclosed in WO2013024106A1 or combinations thereof. A preferred unreactive additive oil is methylphenyl silicone oil.

A further additive oil optionally present in the coating compositions of the invention is fluorinated amphiphilic polymers/oligomers as described in WO2014131695.

A suitable additive oil may also be based on methacrylate co-polymers having polysiloxane side chains and polyether or nitrogen containing hydrophilic groups such as described in WO2019101912 A1 and WO2019101920 A1.

### Pigments

The coating composition of the invention preferably comprises one or more pigments. The pigments may be inorganic pigments, organic pigments or a mixture thereof. Inorganic pigments are preferred. The pigments may be surface treated.

Representative examples of pigments include black iron oxide, red iron oxide, yellow iron oxide, titanium dioxide, zinc oxide, carbon black, graphite, red molybdate, yellow molybdate, zinc sulfide, antimony oxide, sodium aluminium sulfosilicates, quinacridones, phthalocyanine blue, phthalocyanine green, indanthrone blue, cobalt aluminium oxide, carbazoledioxazine, isoindoline orange, bis-acetoaceto-tolidiole, benzimidazolone, quinaphthalone yellow, isoindoline yellow, tetrachloroisoindolinone, and quinophthalone yellow, metallic flake materials (e.g. aluminium flakes). Preferred pigments are black iron oxide, red iron oxide, yellow iron oxide, phthalocyanine blue and titanium dioxide. In one preferred embodiment the titanium dioxide is surface treaded with a silicone compound, a zirconium compound or a zinc compound.

The amount of pigment present in the coating composition of the present invention is preferably 0 to 25 wt% and more preferably 0.5 to 15 wt% based on the total dry weight of the coating composition.

### Solvent

The fouling release coating composition of the present invention preferably comprises a solvent. Suitable solvents for use in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

The amount of solvent present in the fouling release coating compositions of the present invention is preferably as low as possible as this minimizes the VOC content. Preferably solvent is present in the compositions of the invention in an amount of 0-35 wt% and more preferably 1-30 wt% based on the total weight of the composition. The skilled man will appreciate that the solvent content will vary depending on the other components present.

### Fillers

The coating composition of the present invention optionally comprises fillers. Examples of fillers that can be used in the coating composition according to the present invention are zinc oxide, barium sulphate, calcium sulphate, calcium carbonate, silicas or silicates (such as talc, feldspar, china clay and nepheline syenite) including fumed silica, bentonite and other clays, and solid silicone resins, which are generally condensed branched polysiloxanes. Some fillers such as fumed silica may have a thickening effect on the coating composition.

Preferred fillers are fumed silica fillers. The fumed silica fillers may have an untreated surface or a hydrophobically modified surface. Preferably the fumed silica filler has a hydrophobically modified surface. Examples of commercially available fumed silica fillers are TS-610, TS-530, EH-5, H-5, and M-5 from Cabot and Aerosil^{®} R972, Aerosil^{®} R974, Aerosil^{®} R976, Aerosil^{®} R104, Aerosil^{®} R202, Aerosil^{®} R208, Aerosil^{®} R805, Aerosil^{®} R812, Aerosil^{®} 816, Aerosil^{®} R7200, Aerosil^{®} R8200, Aerosil^{®} R9200, Aerosil^{®} R711 from Evonik.

The amount of fillers present in the coating composition of the present invention is preferably 0 to 25 wt%, more preferably 0.1 to 10 wt% and still more preferably 0.15 to 5.0 wt%, based on the total dry weight of the coating composition.

### Additives

The coating composition of the present invention optionally comprises one or more additives. Examples of additives that may be present in the coating composition of the invention include reinforcing agents, thixotropic agents, thickening agents, anti-settling agents, dehydrating agents, dispersing agents, wetting agents, surfactants, binders, plasticizers, and dyes.

Examples of thixotropic agents, thickening agents and anti-settling agents are silicas such as fumed silicas, organo-modified clays, amide waxes, polyamide waxes, amide derivatives, polyethylene waxes, oxidized polyethylene waxes, hydrogenated castor oil wax and mixtures thereof. Preferably thixotropic agents, thickening agents and anti-settling agents are each present in the composition of the invention in an amount of 0-10 wt%, more preferably 0.1-6 wt% and still more preferably 0.1-2.0 wt%, based on the total dry weight of the composition.

The dehydrating agents and desiccants that may be used in the fouling release coating compositions include organic and inorganic compounds. The dehydrating agents can be hygroscopic materials that absorb water or binds water as crystal water, often referred to as desiccants. Examples of desiccants include calcium sulphate hemihydrate, anhydrous calcium sulphate, anhydrous magnesium sulphate, anhydrous sodium sulphate, anhydrous zinc sulphate, molecular sieves and zeolites. The dehydrating agent can be a compound that chemically reacts with water. Examples of dehydrating agents that reacts with water include orthoesters such as trimethyl orthoformate, triethyl orthoformate, tripropyl orthoformate, triisopropyl orthoformate, tributyl orthoformate, trimethyl orthoacetate, triethyl orthoacetate, tributyl orthoacetate and triethyl orthopropionate; ketals; acetals; enolethers; orthoborates such as trimethyl borate, triethyl borate, tripropyl borate, triisopropyl borate, tributyl borate and tri-tert-butyl borate; organosilanes such as trimethoxymethyl silane, vinyltrimethoxysilane, phenyltrimethoxysilane, tetraethoxysilane and ethyl polysilicate.

Preferably the dehydrating agent is present in the compositions of the invention in an amount of 0-5.0 wt%, more preferably 0.5-2.5 wt% and still more preferably 1.0-2.0 wt%, based on the total dry weight of the composition.

In a preferred embodiment the invention therefore provides a fouling release coating composition comprising (dry weight):
(a) 20 wt% or more of a curable polysiloxane-based binder A as hereinbefore defined;
(b) 20 wt% or more of a curable polysiloxane-based binder B as hereinbefore defined;
(c) 1 to 20 wt% of a biocide;
(d) 0.05 to 5.0 wt% of at least one catalyst.

In a preferred embodiment the invention therefore provides a fouling release coating composition comprising (dry weight):
(a) at least 40 wt% of a polysiloxane-based binder system comprising at least two different curable polysiloxane-based binders A and B as defined herein wherein binder A constitutes at least 27 wt.% of the total polysiloxane-based binder system and wherein binder B constitutes at least 27 wt.% of the total polysiloxane-based binder system;
(b) 1 to 20 wt% of a biocide;
(c) 0.05 to 5.0 wt% of a catalyst.

In a preferred embodiment the invention therefore provides a fouling release coating composition comprising (dry weight):
(a) at least 40 wt% of a polysiloxane-based binder system comprising at least two different curable polysiloxane-based binders A and B as hereinbefore defined wherein binder A constitutes at least 27 wt.% of the total polysiloxane-based binder system and binder B constitutes at least 27 wt.% of the total polysiloxane-based binder system;
(b) 1 to 20 wt% of a biocide;
(c) 0.05 to 5.0 wt% of a catalyst;
(d) 1.0 to 20 wt% of a hydrophilic modified polysiloxane; and
(e) 2.0 to 8.0 wt% crosslinker.

In a preferred embodiment the invention therefore provides a fouling release coating composition comprising (dry weight):
(a) at least 40 wt% of a polysiloxane-based binder system comprising at least two different curable polysiloxane-based binders A and B as hereinbefore defined wherein binder A constitutes at least 27 wt.% of the total polysiloxane-based binder system and binder B constitutes at least 27 wt.% of the total polysiloxane-based binder system;
(b) 1 to 20 wt% of a biocide;
(c) 0.05 to 5.0 wt% of a catalyst;
(d) 1.0 to 20 wt% of a hydrophilic modified polysiloxane; and
(e) 2.0 to 8.0 wt% crosslinker; and
(f) 1.0 to 10 wt % of an additive oil.

In a preferred embodiment the invention therefore provides a fouling release coating composition comprising (dry weight):
(a) at least 40 wt% of a polysiloxane-based binder system comprising at least three different curable polysiloxane-based binders A, B and C as defined herein wherein binder A constitutes 20 to 30 wt.% of the total polysiloxane-based binder system, wherein binder B constitutes 35 to 55 wt.% of the total polysiloxane-based binder system and wherein binder C constitutes 25 to 35 wt.% of the total polysiloxane-based binder system;
(b) 1 to 20 wt% of a biocide;
(c) 0.05 to 5.0 wt% of a catalyst.

In a preferred embodiment the invention therefore provides a fouling release coating composition comprising (dry weight):
(a) at least 40 wt% of a polysiloxane-based binder system comprising at least three different curable polysiloxane-based binders A, B and C as defined herein wherein binder A constitutes 20 to 30 wt.% of the total polysiloxane-based binder system, wherein binder B constitutes 35 to 55 wt.% of the total polysiloxane-based binder system and wherein binder C constitutes 25 to 35 wt.% of the total polysiloxane-based binder system;
(b) 1 to 20 wt% of a biocide;
(c) 0.05 to 5.0 wt% of a catalyst;
(d) 1.0 to 20 wt% of a hydrophilic modified polysiloxane; and
(e) 2.0 to 8.0 wt% crosslinker.

In a preferred embodiment the invention therefore provides a fouling release coating composition comprising (dry weight):
(a) at least 40 wt% of a polysiloxane-based binder system comprising at least three different curable polysiloxane-based binders A, B and C as defined herein wherein binder A constitutes 20 to 30 wt.% of the total polysiloxane-based binder system, wherein binder B constitutes 35 to 55 wt.% of the total polysiloxane-based binder system and wherein binder C constitutes 25 to 35 wt.% of the total polysiloxane-based binder system;
(b) 1 to 20 wt% of a biocide;
(c) 0.05 to 5.0 wt% of a catalyst;
(d) 1.0 to 20 wt% of a hydrophilic modified polysiloxane; and
(e) 2.0 to 8.0 wt% crosslinker; and
(f) 1.0 to 10.0 wt % of an additive oil.

### Composition and Paint

The present invention also relates to a method of preparing the fouling release coating composition as hereinbefore described wherein the components present in the composition are mixed. Any conventional production method may be used.

The composition as described herein may be prepared in a suitable concentration for use, e.g. in spray painting. In this case, the composition is itself a paint. Alternatively, the composition may be a concentrate for preparation of paint. In this case, further solvent and optionally other components are added to the composition described herein to form paint. Preferred solvents are as hereinbefore described in relation to the composition.

After mixing, and optionally after addition of solvent, the fouling release coating composition or paint is preferably filled into a container. Suitable containers include cans, drums and tanks.

The fouling release coating composition may be supplied as one-pack, as a two- pack or as a three-pack. Preferably the composition is supplied as a two-pack or as a three-pack.

When supplied as a two pack, the first container preferably comprises a polysiloxane-based binder(s) and the second container preferably comprises any curing agent and the catalyst component. Instructions for mixing the contents of the containers may optionally be provided. Any hydrophilic-modified polysiloxane is preferably part of the first container. Any catalyst is preferably part of the second container.

In a particular embodiment, the invention provides a kit for preparing a fouling release composition as defined herein.

The fouling release coating composition and paint of the invention preferably has a solids content of 50-99 wt%, more preferably 60-99 wt% and still more preferably 65-99 wt%.

Preferably the fouling release coating composition and paint of the invention has a content of volatile organic compounds (VOC) of 50 to 400 g/L, preferably 50 to 350 g/L, e.g. 50 to 300 g/L. VOC content can be calculated (ASTM D5201-05A) or measured (US EPA method 24 or ISO 11890-1).

The coating composition of the present invention may be applied to any pretreated coating layers designed for polysiloxane based fouling release coatings. Examples of such coating layers are epoxy anticorrosive layers and silicone containing tie-layers designed to ensure adhesion between the substrate and the final polysiloxane based fouling release layer. One example of such a tie-layer is described in WO2013/107827. Optionally the tie-layer may contain an antifouling agent.

Preferably the tie-layer has a different color to the top-layer. This makes it easier to see damage and that the right film-thickness has been applied. Preferably the tie-layer is pink, yellow or grey, most preferably the tie-layer is pink.

It is also possible to apply the coating composition according to the present invention on a substrate containing an aged anti-fouling coating layer or fouling release layer. Before the coating composition according to the present invention is applied to such an aged layer, this old layer is cleaned by high-pressure water washing to remove any fouling.

The coating composition according to the present invention may be applied in one or two or more layers. Preferably the coating composition according to the present invention is applied in one layer

The dry film thickness of each of the coating layers of the coating composition of the present invention is preferably 50-500 µm, more preferably 100 - 400 µm, most preferably 150 - 300 µm.

The fouling release coating composition of the present invention will typically be cured at a humidity of 20 - 90 %, preferably 30 - 85 %, more preferred 40 - 80 %

The fouling release coating composition and paint of the invention can be applied to a whole or part of any article surface which is subject to marine fouling. The surface may be permanently or intermittently underwater (e.g. through tide movement, different cargo loading or swell). The article surface will typically be the hull of a vessel or surface of a fixed marine object such as an oil platform or buoy. Application of the coating composition and paint can be accomplished by any convenient means, e.g. via painting (e.g. with brush or roller) or more preferably spraying the coating onto the article. Typically the surface will need to be separated from the seawater to allow coating. The application of the coating can be achieved as conventionally known in the art. After the coating is applied, it is preferably dried and/or cured.

### Applications

The fouling release coating of the present invention is typically applied to the surface of a marine structure, preferably the part of a marine structure which is submerged when in use. Typical marine structures include vessels (including but not limited to boats, yachts, motorboats, motor launches, ocean liners, tugboats, tankers, container ships and other cargo ships, submarines, and naval vessels of all types), pipes, shore and off-shore machinery, constructions and objects of all types such as piers, pilings, bridge substructures, water-power installations and structures, underwater oil well structures, nets and other aquatic culture installations, and buoys, etc. The surface of the substrate may be the "native" surface (e.g. the steel surface).

### Examples

### Determination Methods

### Determination of binder viscosity

The viscosity of the binders was determined in accordance with ASTM D2196 Test Method A using a Brookfield DV-I Prime digital viscometer with LV-2 or LV-4 spindle at 12 rpm. The binders were tempered to 23.0 °C ± 0.5 °C before the measurements.

Determination of polymer average molecular weights distribution The polymers were characterised by Gel Permeation Chromatography (GPC) measurement. The molecular weight distribution (MWD) was determined using a Malvern Omnisec Resolve and Reveal system with two PLgel 5 µm Mixed-D columns from Agilent in series. The columns were calibrated by conventional calibration using narrow polystyrene standards. The analysis conditions were as set out in table 1 below.

| Table IDetector | RI |
|---|---|
| Cell volume | 12 µl |
| Column Set | Agilent PLgel 5 µm Mixed-D, 2 columns in series |
| Mobile Phase | THF |
| Flow rate | 1 ml/min |
| Inj ection volume | 100 µl |
| Autosampler Temperature | 25 °C |
| Column Oven Temperature | 35 °C |
| Detector Oven Temperature | 35 °C |
| Data Processing | Omnisec 5.1 |
| Calibration standards | Agilent Polystyrene Medium EasiVials (4 ml) Red, Yellow and Green |

Samples were prepared by dissolving an amount of polymer solution corresponding to 25 mg dry polymer in 5 ml THF. The samples were kept for a minimum of 3 hours at room temperature prior to sampling for the GPC measurements. Before analysis the samples were filtered through 0.45 µm Nylon filters. The number-average molecular weight (Mn), weight-average molecular weight (Mw) and polydispersity index are reported.

**Table 1: Polymers used in the examples.**

| Polymer | Functionality | Viscosity [mPas] | Mn [Da] | Mw [Da] |
|---|---|---|---|---|
| S1 | α,ω-hydroxy | 440 | 10700 | 22400 |
| S2 | α,ω-hydroxy | 3800 | 30837 | 59082 |
| S3 | α,ω-hydroxy | 20050 | 55594 | 104811 |

### Preparation of coating compositions

The coating compositions were prepared by first mixing the components in part (A) shown in Tables 2 to 3 below using a high-speed dissolver equipped with an impeller disc. The components in part (B) were mixed with the components in part (A) shortly before application of the coating.

### Testing of antifouling performance in Singapore and Sandefjord

PVC panels were coated with a first coat of Jotun Jotacote Universal N10 primer and a second coat of Jotun SeaQuest Tiecoat using airless spray within specified conditions. The coating compositions of the Inventive and Comparative Examples were applied to the PVC panels pre-coated with primer and tiecoat to a wet film thickness of 300 µm using either airless spray or an film applicator.

The panels were used for static testing on a raft in Singapore and Sandefjord where the panels were submerged 0.3-1.3 m below the sea surface. The panels were evaluated by visual inspection using the scale shown in Table 2 below.

**Table 2: Rating for area covered by fouling**

| **Rating** | **Area covered by fouling** |
|---|---|
| Excellent | 0-10% |
| Good | 11 - 20 % |
| Fair | 21-30% |
| Poor | 31-50% |
| Extremely Poor | More than 50 % |

**Table 2**

| | **Ex. paint 1** | **Comp. paint 1** |
|---|---|---|
| | Two binders | Single binder |
| Part A | | |
| S1: α,ω-Hydroxypolydimethylsiloxane, (44,0mPas) | 29.7 | 0 |
| S2: α,ω-Hydroxypolydimethylsiloxane, (3,800 mPas) | 0 | 59.3 |
| S3: α,ω-Hydroxypolydimethylsiloxane, (20,050 mPas) | 29.7 | 0 |
| Hydrophobic silica | 0.5 | 0.5 |
| Iron oxide red | 3.5 | 3.5 |
| Copper pyrithione | 7.7 | 7.7 |
| Me,Ph-modified silicone oil | 1.3 | 1.3 |
| Polyether-modified silicone oil (Mw 7,460, HLB 4.7) | 5 | 5 |
| Xylene | 22.6 | 22.6 |
| Total part A | 100.0 | 100 |
| | | |

| Part B | | |
|---|---|---|
| Ethyl Silicate¹ | 4.2 | 4.2 |
| Dibutyltin diacetate² | 0.2 | 0.2 |
| 1-Methoxy-2-propanol | 4 | 4 |
| Total part B | 8.4 | 8.4 |
| Raft results Singapore (40 weeks) | Good | Fair |

| | | |
|---|---|---|
| ¹Wacker^{®} TES 40 WN. ²TIB KAT 233 | | |

**Table 3: Fouling performance tri- vs bimodal binder fouling release coatings**

| | **Example paint 2** | **Example paint 3** |
|---|---|---|
| | Three binders | Two binders |

| Part A | | |
|---|---|---|
| S1: α,ω-Hydroxypolydimethylsiloxane, (440 mPas) | 13.2 | 26.3 |
| S2: α,ω-Hydroxypolydimethylsiloxane, (3,800 mPas) | 15.8 | 0 |
| S3: α,ω-Hydroxypolydimethylsiloxane, (20,050 mPas) | 23.7 | 26.3 |
| Hydrophobic silica | 0.5 | 0.5 |
| Iron oxide red | 3.5 | 3.5 |
| Copper pyrithione | 8.0 | 8.0 |

| | **Example paint 2** | **Example paint 3** |
|---|---|---|
| Me,Ph-modified silicone oil | 5 | 5 |
| Polyether-modified silicone oil (Mw 7,460, HLB 4.7) | 10 | 10 |
| Xylene | 20.4 | 20.4 |
| Total part A | 100.0 | 100.0 |
| | | |

| Part B | | |
|---|---|---|
| Ethyl Silicate¹ | 4.2 | 4.2 |
| Dibutyltin diacetate2 | 0.2 | 0.2 |
| 1-Methoxy-2-propanol | 4 | 4 |
| Total part B | 8.4 | 8.4 |
| Raft results Singapore (63 weeks) | Excellent | Fair |
| Raft results Sandefjord (65 weeks) | Excellent | Good |

| | | |
|---|---|---|
| *¹Wacker*^{®} *TES 40 WN. ²TIB KAT 233* | | |

The following observations can be made with regards to the above examples. The use of two or three binders offers improved fouling performance.

The comparison of example paint 1 and comparative paint 1 in Table 2 show that the fouling performance is improved if the combination of two polysiloxane binders as defined herein is used compared with using only one polysiloxane binder. These test panels were submerged in the sea at the same time. The comparison of example paint 2 and example paint 3 in Table 3 show that fouling performance is significantly improved if three polysiloxane binders as defined herein are used compared with using two polysiloxane binders. These test panels were submerged in the sea at the same time.

It should be noted that as fouling intensity varies with temperature, season, salinity of the seawater and from year to year only panels that has been submerged at the exact same time can be directly compared.

## Claims

1. A fouling release coating composition comprising:
i) a polysiloxane-based binder system comprising at least two different curable polysiloxane-based binders A and B wherein binder A is present in 15 wt.% or more of the total weight of the binder system and has a weight average molecular weight of 35,000 or less and binder B is present in 15 wt.% or more of the total weight of binder system and has a weight average molecular weight of 70,000 or more;
ii) a biocide, preferably a pyrithione salt; and
iii) a catalyst.

2. A fouling release coating composition comprising:
i) a polysiloxane-based binder system comprising at least three different curable polysiloxane-based binders A, B and C wherein binder A is present in 15 wt.% or more of the total weight of the binder system and has a weight average molecular weight of 35,000 or less, binder B is present in 15 wt.% or more of the total weight of binder system and has a weight average molecular weight of 70,000 or more, and binder C is present in 15 wt% or more of the total weight of the binder system and has a weight average molecular weight of 40,000 to 70,000;
ii) a biocide; and
iii) a catalyst.

3. A fouling release coating composition comprising:
i) a polysiloxane-based binder system comprising at least two different curable polysiloxane-based binders A and B wherein binder A is present in 15 wt.% or more of the total weight of the binder system and has a viscosity of 1500 mPas or less, and binder B is present in 15 wt.% or more of the total weight of binder system and has a viscosity of 10,000 mPas or more;
ii) a biocide; and
iii) a catalyst.

4. A fouling release coating composition comprising:
i) a polysiloxane-based binder system comprising at least three different curable polysiloxane-based binders A, B and C wherein binder A is present in 15 wt.% or more of the total weight of the binder system and has a viscosity of 1500mPas or less, binder B is present in 15 wt.% or more of the total weight of binder system and has a viscosity of 10,000 mPas or more, and binder C is present in 15 wt% or more of the total weight of the binder system and has a viscosity of 2,000 to 9,500 mPas;
ii) a biocide; and
iii) a catalyst.

5. A fouling release coating composition as claimed in any one of claims 1 to 4 wherein any of the polysiloxane-based binders A to C are of formula (D1): 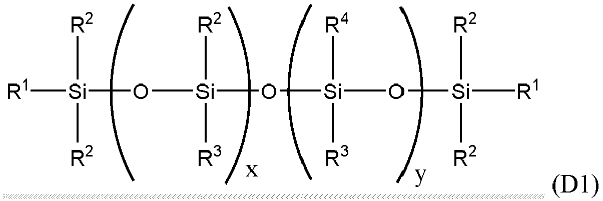 wherein
each R¹ is independently selected from a hydroxyl group, C₁₋₆-alkoxy group, C₁₋₆-hydroxyl group, C₁₋₆-epoxy containing group, C₁₋₆ amine group or O-Si(R⁵)_{3-z} (R⁶)_{z;}
each R² is independently selected from C₁₋₁₀ alkyl, C₆₋₁₀ aryl, C₇₋₁₀ alkylaryl or C₁₋₆ alkyl substituted by poly(alkylene oxide) and/or a group as described for R¹;
each R³ and R⁴ is independently selected from C₁₋₁₀ alkyl, C₆₋₁₀ aryl, C₇₋₁₀ alkylaryl or C₁₋₆ alkyl substituted by poly(alkylene oxide);
each R⁵ is independently a hydrolysable group such as C₁₋₆ alkoxy group, an acetoxy group, an enoxy group or ketoxy group;
each R⁶ is independently selected from a C₁₋₆ alkyl group;
z is 0 or an integer from 1-2;
x is an integer of at least 2;
y is an integer of at least 2.

6. A fouling release coating composition as claimed in any one of claims 1 to 5 wherein the polysiloxane-based binder A, B and/or C of the present invention is a polydimethylsiloxane.

7. A fouling release coating composition as claimed in any preceding claim wherein the weight average molecular weight of the polysiloxane-based binder A is 15,000 to 30,000 g/mol;
the weight average Mw of binder B is 80,000 to 150,000 g/mol; and if present;
the weight average molecular weight of the polysiloxane-based binder C is 45,000 to 65,000 g/mol.

8. A fouling release coating composition as claimed in any preceding claim wherein the viscosity of the polysiloxane-based binder A is 300 to 1,500 mPas;
the viscosity of binder B is 15,000-25000 mPas; and if present
the viscosity of the polysiloxane-based binder C is 2,500 to 8,000 mPas.

9. The binder system preferably forms at least 35 wt% of the fouling release coating composition (dry weight), such as at least 40 wt%, especially at least 45 wt%, e.g. 35 to 75 wt% of the fouling release coating composition (dry weight).

10. A fouling release coating composition as claimed in any preceding claim wherein component (iii) is an organometallic catalyst such as an organotin compound.

11. A fouling release coating composition as claimed in any preceding claim further comprising a hydrophilic modified polysiloxane and/or an additive oil.

12. A fouling release coating composition as claimed in any preceding claim comprising
(a) at least 40 wt% of a polysiloxane-based binder system comprising at least two different curable polysiloxane-based binders A and B as defined in claim 1 to 9 wherein binder A constitutes at least 27 wt.% of the total polysiloxane-based binder system and wherein binder B constitutes at least 27 wt.% of the total polysiloxane-based binder system; or
(a) at least 40 wt% of a polysiloxane-based binder system comprising at least three different curable polysiloxane-based binders A, B and C as defined in claim 2 to 9 wherein binder A constitutes 20 to 30 wt.% of the total polysiloxane-based binder system, wherein binder B constitutes 35 to 55 wt.% of the total polysiloxane-based binder system and wherein binder C constitutes 25 to 35 wt.% of the total polysiloxane-based binder system;
(b) 1 to 20 wt% of a biocide;
(c) 0.05 to 5.0 wt% of a catalyst.

13. A fouling release coating composition as claimed in any preceding claim comprising:
(a) at least 40 wt% of a polysiloxane-based binder system comprising at least two different curable polysiloxane-based binders A and B as hereinbefore defined wherein binder A constitutes at least 27 wt.% of the total polysiloxane-based binder system and binder B constitutes at least 27 wt.% of the total polysiloxane-based binder system; or
(a) at least 40 wt% of a polysiloxane-based binder system comprising at least three different curable polysiloxane-based binders A, B and C as defined herein wherein binder A constitutes 20 to 30 wt.% of the total polysiloxane-based binder system, wherein binder B constitutes 35 to 55 wt.% of the total polysiloxane-based binder system and wherein binder C constitutes 25 to 35 wt.% of the total polysiloxane-based binder system;
(b) 1 to 20 wt% of a biocide;
(c) 0.05 to 5.0 wt% of a catalyst;
(d) 1.0 to 20 wt% of a hydrophilic modified polysiloxane; and
(e) 2.0 to 8.0 wt% crosslinker.

14. A process for applying a fouling release coating composition to a substrate comprising applying, e.g. by spraying, a fouling release coating composition as claimed in any preceding claim to a substrate and allowing the coating composition to cure.

15. A substrate comprising a cured fouling release coating composition as claimed in claim 1 to 13.
